# EUROPÄISCHE PATENTSCHRIFT

(11) **EP 3 275 347 B1**
(45) Veröffentlichungstag und Bekanntmachung des Hinweises auf die Patenterteilung: **17.04.2019**
(21) Anmeldenummer: 17179952.1
(22) Anmeldetag: 06.07.2017
(51) Int. Cl.: A47J 31/44

(54) **GETRÄNKEAUTOMAT**
DRINKS MACHINE
AUTOMATE À BOISSONS

(30) Priorität: 28.07.2016 DE 102016213880
(43) Veröffentlichungstag der Anmeldung: 31.01.2018
(73) Patentinhaber: BSH Hausgeräte GmbH, 81739 München (DE)
(72) Erfinder: Spasic, Matej, 3311 Sempeter (SI); Ogrizek, Bostjan, 3320 Velenje (SI)

(56) Entgegenhaltungen:
- DE-A1- 10 210 161
- DE-A1-102009 003 251
- DE-U1-202007 008 590
- US-A1- 2013 180 622

## Beschreibung

Die vorliegende Erfindung betrifft einen Getränkeautomaten mit einem entnehmbaren Tassenpodest zum Abstellen eines Getränkebehälters gemäß dem Oberbegriff des Anspruchs 1..

Getränkeautomaten, beispielsweise Kaffeeautomaten, sind bereits vielfältig bekannt und finden zunehmend nicht nur im gewerblichen Bereich, sondern auch im privaten Bereich, Verwendung. Da derartige Kaffeeautomaten auch zunehmend ein Lifestyleprodukt sind, legen Verbraucher zunehmend Wert auf individuelle Merkmale sowie designerische Raffinessen. Besonders spezielle Beleuchtungseffekte stehen dabei hoch im Kurs der Verbraucher und bieten darüber hinaus interessante Unterscheidungsmerkmale im Wettbewerb.

Bei gängigen Getränkeautomaten sind dabei bereits die einzelnen Tasten zum Auswählen des herzustellenden Getränks beleuchtet, wodurch insbesondere die Bedienung des Getränkeautomaten bei schlechten Lichtverhältnissen erleichtert werden soll. Darüber hinaus weisen bekannte Getränkeautomaten auch Beleuchtungseinrichtungen auf, die am Getränkeautomaten selbst befestigt und in Richtung eines Tassenpodests gerichtet sind, wodurch eine Abstellfläche für einen Getränkebehälter und bei darauf abgestelltem Getränkebehälter auch dieser selbst beleuchtet werden können, was sowohl einen optisch interessanten Effekt bietet als auch wiederum die Bedienung des Getränkeautomaten bei schlechten Lichtverhältnissen erleichtert. Die Beleuchtungseinrichtungen sind dabei aufgrund der Energieversorgung stets im Getränkeautomaten selbst angeordnet.

Beispielsweise beschreibt die Druckschrift US 2013/180622 A1 einen Getränkeautomaten mit einem entnehmbaren Tassenpodest zum Abstellen eines Getränkebehälters, bei dem der Getränkeautomat weiter eine Beleuchtungseinrichtung mit einer Lichtquelle aufweist.

Die vorliegende Erfindung beschäftigt sich mit dem Problem, für einen Getränkeautomaten der gattungsgemäßen Art eine verbesserte oder zumindest eine alternative Ausführungsform anzugeben, die sich insbesondere durch ein völlig neuartiges Beleuchtungskonzept auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, erstmals eine Beleuchtungseinrichtung mit einer Leuchtquelle in einem entnehmbaren Tassenpodest eines Getränkeautomaten anzuordnen. Das Anordnen der Beleuchtungseinrichtung im Tassenpodest ist bislang nicht bekannt, da aufgrund der Entnehmbarkeit des Tassenpodests stets die Schwierigkeit bestand, eine im Tassenpodest selbst angeordnete Beleuchtungseinrichtung mit elektrischer Energie zu versorgen. Hierfür müssten beispielsweise aufwendige Kupplungssysteme geschaffen werden, die eine Übertragung elektrischer Energie vom Getränkeautomaten zu der im Tassenpodest angeordneten Beleuchtungseinrichtung erlauben. Derartige Kupplungssysteme sind jedoch vergleichsweise aufwendig und auch störanfällig. Generell bietet jedoch die Erfindung, die Beleuchtungseinrichtung mit einer Leuchtquelle erstmals im Tassenpodest selbst anzuordnen, völlig neuartige Möglichkeiten der Beleuchtung, die nicht nur ein Anstrahlen des Tassenpodests bzw. einer Abstellfläche für einen Getränkebehälter von oben, sondern auch ein aktives Beleuchten der Abstellfläche selbst im Tassenpodest ermöglichen. Der erfindungsgemäße Getränkeautomat unterscheidet sich somit aufgrund seiner erzielbaren optischen Effekte grundsätzlich von allen bislang bekannten Getränkeautomaten.

Bei einer vorteilhaften Weiterbildung der erfindungsgemäßen Lösung weisen der Getränkeautomat eine Sendeeinrichtung und die Beleuchtungseinrichtung eine Empfangseinrichtung zur drahtlosen Energieübertragung auf. Eine derartige drahtlose Energieübertragung kennt man beispielsweise bereits von sogenannten RFID-Chips, wobei die drahtlose Energieübertragung im vorliegenden Fall zur Versorgung der im Tassenpodest angeordneten Beleuchtungseinrichtung mit elektrischer Energie genutzt wird. Eine derartige drahtlose Energieübertragung erübrigt insbesondere ein vergleichsweise aufwendiges und unter Umständen auch störanfälliges Kupplungssystem und erlaubt darüber hinaus auch eine elektrische Energieübertragung vom Getränkeautomaten zur Beleuchtungseinrichtung des Tassenpodests ohne dass der Tassenpodest vollständig in den Getränkeautomaten eingeschoben ist. Von besonderem Vorteil ist darüber hinaus, dass die Empfangseinrichtung im Tassenpodest auch gekapselt ausgebildet sein kann, wodurch der entnehmbare Tassenpodest einfach gereinigt, beispielsweise sogar in einer Spülmaschine gespült werden kann.
Bei einer vorteilhaften Weiterbildung der erfindungsgemäßen Lösung weist die Leuchtquelle zumindest eine Leuchtdiode auf. Eine derartige Leuchtdiode bietet dabei zwei wesentliche Vorteile, nämlich einerseits einen geringen Energiebedarf und andererseits eine hohe Leuchtkraft, sowie zusätzlich noch eine lange Lebensdauer, so dass derartige Leuchtdioden üblicherweise problemlos über die gesamte Lebensdauer des Getränkeautomaten funktionstüchtig bleiben. Durch Leuchtdioden unterschiedlicher Farben können darüber hinaus spezielle Lichteffekte erzielt werden. Selbstverständlich ist auch denkbar, dass die Beleuchtungseinrichtung eine Vielzahl derartiger Leuchtdioden aufweist, die beispielsweise bei einem Anschalten des Getränkeautomaten laufende Pfeile in Richtung einer Abstellfläche für einen Getränkebehälter auf dem Tassenpodest erzeugen, wodurch ein besonderer optischer Effekt und zugleich auch eine Hilfestellung, insbesondere bei schlechten Lichtverhältnissen, angeboten werden können.

Bei einer weiteren vorteilhaften Ausführungsform der erfindungsgemäßen Lösung ist die Leuchtquelle im Bereich einer Getränkebehälterabstellfläche angeordnet und insbesondere ringförmig ausgebildet. Hierdurch kann einem Benutzer ein optisch eindeutiger Hinweis dahingehend gegeben werden, wo er seinen Getränkebehälter abstellen soll. Selbstverständlich sind auch anders ausgebildete Leuchtquellen denkbar, die auch nicht nur an einer Oberseite des Tassenpodests, beispielsweise im Bereich einer Abstellfläche für einen Getränkebehälter, sondern selbstverständlich auch in einer Front- oder Seitenwand des Tassenpodests angeordnet sein können.

Zweckmäßig ist die Leuchtquelle hinsichtlich ihrer Lichtfarbe einstellbar. Hierdurch lässt sich eine spezielle Ambientebeleuchtung erreichen, welche insbesondere Stimmungen aufgreift und optisch umsetzt. Darüber hinaus ist durch die Einstellbarkeit der Lichtfarbe auch eine Anpassung des optischen Erscheinungsbildes des Getränkeautomaten an seine Umgebung vergleichsweise einfach möglich. Selbstverständlich ist bei höherwertigen Ausstattungslinien auch denkbar, dass zusätzlich eine Steuerungseinrichtung vorgesehen ist, welche die Lichtfarbe der Leuchtquelle entsprechend vorgegebener Programme ändert bzw. anpasst.

Bei einer weiteren vorteilhaften Ausführungsform der erfindungsgemäßen Lösung weist die Beleuchtungseinrichtung ein Display auf. Bei einer reinen Beleuchtungsfunktion ist es mit einem derartigen Display zusätzlich möglich, weitere Informationen für einen Benutzer, beispielsweise der jeweilige Verfahrensstand beim Herstellen eines Getränks, visuell anzuzeigen. Insbesondere lassen sich über ein derartiges Display beispielsweise auch bereits an einem Display des Getränkeautomaten ausgegebene Informationen nochmals oder in geänderter Art und Weise ausgeben.

Die vorliegende Erfindung beruht weiter auf dem allgemeinen Gedanken, ein Tassenpodest für einen zuvor beschriebenen Getränkeautomaten anzubieten, der eine Beleuchtungseinrichtung mit einer Leuchtquelle und einer Empfangseinrichtung zum drahtlosen Energieempfang aufweist. Ein derartiger Tassenpodest kann dann über den Ersatzteilhandel vertrieben werden. Selbstverständlich kann dabei der separat angebotene Tassenpodest auch sämtliche in den zuvor beschriebenen Absätzen vorhandenen Merkmale einzeln oder in Kombination aufweisen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßen Getränkeautomaten,
- Fig. 2: eine Detaildarstellung aus Fig. 1 mit einer getränkeautomatenseitigen Sendeeinrichtung und einer beleuchtungseinrichtungsseitigen Empfangseinrichtung zur drahtlosen Energieübertragung.

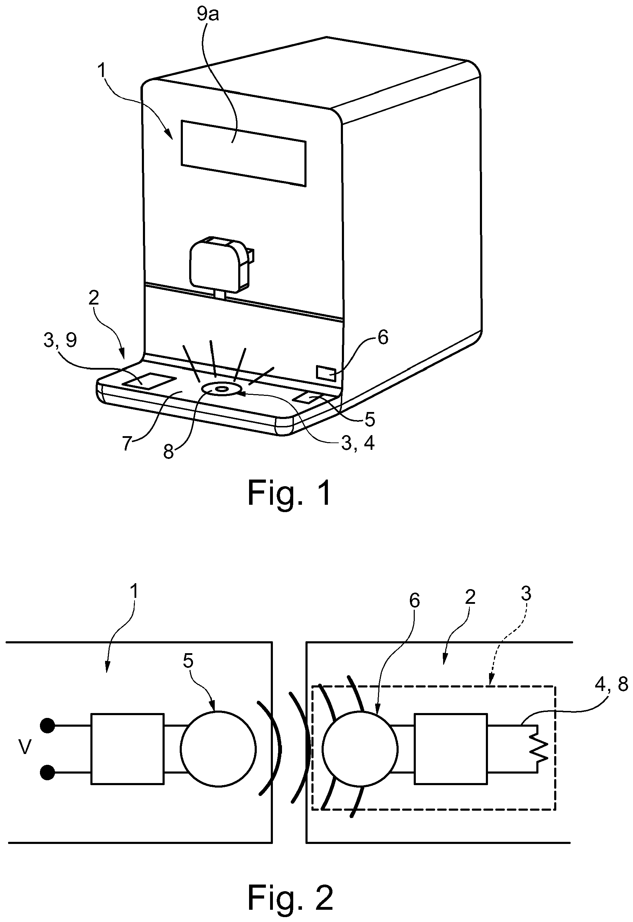

Entsprechend den Fig. 1 und 2, weist ein erfindungsgemäßer Getränkeautomat 1, der beispielsweise als Kaffeevollautomat ausgebildet sein kann, einen entnehmbaren Tassenpodest 2 zum Abstellen eines nicht näher bezeichneten Getränkebehälters auf. Erfindungsgemäß weist nun der Tassenpodest 2 eine Beleuchtungseinrichtung 3 mit zumindest einer Leuchtquelle 4 auf. Um nun die Beleuchtungseinrichtung 3, welche gemäß der Fig. 2 mit unterbrochen gezeichneter Linie umrandet ist, sowie deren Leuchtquelle 4 mit elektrischer Energie zu versorgen, besitzt der Getränkeautomat 1 eine Sendeeinrichtung 5 und die Beleuchtungseinrichtung 3 eine Empfangseinrichtung 6, welche zur drahtlosen Energieübertragung ausgebildet sind. Hierdurch kann insbesondere auf ein aufwendiges und unter Umständen störanfälliges Stecker-Kupplungs-System verzichtet werden. Mit der drahtlosen Energieübertragung ist es somit erstmals möglich, auch Leuchtquellen 4 direkt in den Tassenpodest 2 zu integrieren und nicht wie bislang ausschließlich in den Getränkeautomaten 1. Mit dem erfindungsgemäßen Getränkeautomaten 1 ist somit erstmals ein aktives Beleuchten des Tassenpodests 2 bzw. einer Abstellfläche 7 desselben möglich.

Die Leuchtquelle 4 weist dabei zumindest eine Leuchtdiode 8 auf, vorzugsweise sogar mehrere Leuchtdioden 8, und erlaubt dadurch ein nahezu unbegrenztes und individualisiertes Beleuchten des Tassenpodests 2. Die Leuchtquelle 4 kann dabei insbesondere im Bereich der Abstellfläche 7 angeordnet sein und beispielsweise ringförmig ausgebildet werden (vgl. Fig. 1), wodurch einem Benutzer des Getränkeautomaten 1 auch bei schlechten Lichtverhältnissen vergleichsweise einfach eine richtige Abstellposition für den Getränkebehälter angezeigt wird. Unterstützt werden kann dies beispielsweise dadurch, dass die Leuchtquelle 4 ringförmig ausgebildet ist, wie dies beispielsweise gemäß der Fig. 1 dargestellt ist.

Bei einer besonders bevorzugten Ausführungsform der erfindungsgemäßen Lösung ist die Leuchtquelle 4 hinsichtlich ihrer Lichtfarbe einstellbar, wobei selbstverständlich auch Leuchtdioden zum Einsatz kommen können, die unterschiedliche Farben ausstrahlen können.

Zusätzlich kann die Beleuchtungseinrichtung 3 auch ein Display 9 aufweisen, über welche weitere Informationen angezeigt werden. So kann beispielsweise das Display 9 im Tassenpodest 2 mit einem Display 9a am Getränkeautomaten 1 informationstechnisch gekoppelt sein und die dort aufgeführten Informationen oder weitere Informationen visuell darstellen.

Selbstverständlich ist es auch denkbar, dass die Beleuchtungseinrichtung 3 mehrere, einzeln gesteuerte Leuchtdioden 8 aufweist, die beispielsweise in der Art eines Pfeiles angeordnet sind und dadurch durch ein nacheinander erfolgendes Aktivieren optisch zu einer Abstellposition für den Getränkebehälter hinführen. Selbstverständlich ist auch denkbar, dass die Leuchtquelle 4 bzw. die einzelnen Leuchtdioden 8 nicht nur im Bereich der Abstellfläche 7, sondern beispielsweise auch im Bereich einer Front- oder einer Seitenfläche des Tassenpodests 2 angeordnet sind.

Mit dem erfindungsgemäßen Tassenpodest 2 und dem erfindungsgemäßen Getränkeautomaten 1 ist erstmals ein völlig neuartiges Beleuchtungskonzept möglich, was bislang bei einer drahtgebundenen Beleuchtungseinrichtung so nicht möglich war. Insbesondere ist auch ein Anstrahlen der auf den Tassenpodest 2 abgestellten Getränkebehälter von unten erstmals möglich. Die Beleuchtungseinrichtung 3 mit der Empfangseinrichtung 6 und der Leuchtquelle 4 ist dabei in dem Tassenpodest 2 vorzugsweise gekapselt angeordnet und dadurch unempfindlich gegenüber äußeren Einflüssen, wie beispielsweise Wasser, Schmutz oder Temperatur, wodurch auch eine besonders einfache Reinigung des Tassenpodests 2, ähnlich wie bei bisherigen Tassenpodesten, möglich ist.

Darüber hinaus ist auch das Entnehmen des Tassenpodests 2 aus dem Getränkeautomaten 1 sowie das Einsetzen analog zu bisherigen Tassenpodesten und bisherigen Getränkeautomaten 1 problemlos möglich. Besonders die Möglichkeit, mit speziellen optischen Beleuchtungseffekten im Bereich des Tassenpodests 2 erstmals zu agieren, schafft einen nicht zu unterschätzenden Wettbewerbsvorteil im Markt.

### Bezugszeichenliste

- 1: Getränkeautomat
- 2: Tassenpodest
- 3: Beleuchtungseinrichtung
- 4: Leuchtquelle
- 5: Sendeeinrichtung
- 6: Empfangseinrichtung
- 7: Abstellfläche
- 8: Leuchtdiode (LED)
- 9, 9a: Display

## Patentansprüche

1. Getränkeautomat (1) mit einem entnehmbaren Tassenpodest (2) zum Abstellen eines Getränkebehälters, **dadurch gekennzeichnet, dass** der Tassenpodest (2) eine Beleuchtungseinrichtung (3) mit einer Leuchtquelle (4) aufweist.

2. Getränkeautomat nach Anspruch 1, **dadurch gekennzeichnet, dass** der Getränkeautomat (1) eine Sendeeinrichtung (5) und die Beleuchtungseinrichtung (3) eine Empfangseinrichtung (6) zur drahtlosen Energieübertragung aufweisen.

3. Getränkeautomat nach Anspruch 1 oder 2, **dadurch gekennzeichnet, dass** die Leuchtquelle (4) zumindest eine Leuchtdiode (8) aufweist.

4. Getränkeautomat nach einem der Ansprüche 1 bis 3, **dadurch gekennzeichnet, dass** die Leuchtquelle (4) im Bereich einer Abstellfläche (7) für einen Getränkebehälter angeordnet ist.

5. Getränkeautomat nach einem der Ansprüche 1 bis 4, **dadurch gekennzeichnet, dass** die Leuchtquelle (4) ringförmig ausgebildet ist.

6. Getränkeautomat nach einem der Ansprüche 1 bis 5, **dadurch gekennzeichnet, dass** die Leuchtquelle (4) hinsichtlich ihre Lichtfarbe einstellbar ist.

7. Getränkeautomat nach einem der Ansprüche 1 bis 6, **dadurch gekennzeichnet, dass** der Getränkeautomat (1) als Kaffeeautomat ausgebildet ist.

8. Getränkeautomat nach einem der Ansprüche 1 bis 7, **dadurch gekennzeichnet, dass** die Beleuchtungseinrichtung (3) ein Display (9) aufweist.

9. Getränkeautomat nach Anspruch 8, **dadurch gekennzeichnet, dass** das Display (9) zur Informationsausgabe ausgebildet ist.

## Claims

1. Automatic beverage machine (1) with a removeable cup stand (2) for the placement of a beverage container, **characterised in that** the cup stand (2) has an illumination facility (3) with a light source (4).

2. Automatic beverage machine according to claim 1, **characterised in that** the automatic beverage machine (1) has a transmitting facility (5) and the illumination facility (3) has a receiving facility (6) for wireless energy transfer.

3. Automatic beverage machine according to claim 1 or 2, **characterised in that** the light source (4) has at least one light-emitting diode (8).

4. Automatic beverage machine according to one of claims 1 to 3, **characterised in that** the light source (4) is arranged in the region of a placement area (7) for a beverage container.

5. Automatic beverage machine according to one of claims 1 to 4, **characterised in that** the light source (4) is embodied in a ring-shaped manner.

6. Automatic beverage machine according to one of claims 1 to 5, **characterised in that** the light source (4) is able to be adjusted with regard to its light colour.

7. Automatic beverage machine according to one of claims 1 to 6, **characterised in that** the automatic beverage machine (1) is embodied as an automatic coffee machine.

8. Automatic beverage machine according to one of claims 1 to 7, **characterised in that** the illumination facility (3) has a display (9).

9. Automatic beverage machine according to claim 8, **characterised in that** the display (9) is embodied for outputting information.

## Revendications

1. Distributeur de boissons (1) comprenant un socle amovible pour tasse (2) destiné à poser un récipient pour boisson, **caractérisé en ce que** le socle pour tasse (2) présente un dispositif d'éclairage (3) doté d'une source lumineuse (4).

2. Distributeur de boissons (1) selon la revendication 1, **caractérisé en ce que** le distributeur de boissons (1) présente un dispositif d'émission (5) et **en ce que** le dispositif d'éclairage (3) présente un dispositif de réception (6) pour la transmission d'énergie sans fil.

3. Distributeur de boissons (1) selon la revendication 1 ou 2, **caractérisé en ce que** la source lumineuse (4) présente au moins une diode électroluminescente (8).

4. Distributeur de boissons (1) selon l'une quelconque des revendications 1 à 3, **caractérisé en ce que** la source lumineuse (4) est disposée dans la zone d'une surface de pose (7) pour un récipient pour boisson.

5. Distributeur de boissons (1) selon l'une quelconque des revendications 1 à 4, **caractérisé en ce que** la source lumineuse (4) est réalisée de manière annulaire.

6. Distributeur de boissons (1) selon l'une quelconque des revendications 1 à 5, **caractérisé en ce que** la source lumineuse (4) est réglable quant à sa couleur d'éclairage.

7. Distributeur de boissons (1) selon l'une quelconque des revendications 1 à 6, **caractérisé en ce que** le distributeur de boissons (1) est réalisé comme distributeur de café.

8. Distributeur de boissons (1) selon l'une quelconque des revendications 1 à 7, **caractérisé en ce que** le dispositif d'éclairage (3) présente un écran (9).

9. Distributeur de boissons (1) selon la revendication 8, **caractérisé en ce que** l'écran (9) est réalisé pour la sortie d'informations.
